# EUROPEAN PATENT SPECIFICATION

(11) **EP 1 838 494 B1**
(45) Date of publication and mention of the grant of the patent: **13.05.2009**
(21) Application number: 05825448.3
(22) Date of filing: 14.12.2005
(51) Int. Cl.: B23Q 1/01, B23Q 11/00

(54) **PRECISION APPARATUS HAVING A MOVABLE MEMBER, AN AIR SLIT AND A VACUUM DUCT**
PRÄZISIONSGERÄT MIT BEWEGLICHEM ELEMENT, LUFTSPALT UND VAKUUMKANAL
APPAREIL DE PRECISION A ELEMENT MOBILE, FENTE D'AIR ET CONDUIT SOUS VIDE

(30) Priority: 21.12.2004 EP 04106767
(43) Date of publication of application: 03.10.2007
(73) Proprietor: Koninklijke Philips Electronics N.V., 5621 BA Eindhoven (NL)
(72) Inventor: RIJKEN, Antonius, M., NL-5656 AA Eindhoven (NL); CUPPEN, Martinus, A, M., NL-5656 AA Eindhoven (NL); EGGINK, Hendrik, J., NL-5656 AA Eindhoven (NL); NIJLAND, Bjorn, A., H., NL-5656 AA Eindhoven (NL)
(74) Representative: Schouten, Marcus Maria
(86) International application number: PCT/IB2005/054238
(87) International publication number: WO 2006/067687

(56) References cited:
- PATENT ABSTRACTS OF JAPAN vol. 007, no. 029 (M-191), 5 February 1983 (1983-02-05) & JP 57 184643 A (MITSUBISHI JUKOGYO KK), 13 November 1982 (1982-11-13)

## Description

The invention relates to a precision apparatus having a movable member, moving in a bridge element arranged for movement perpendicular to the movement of the moveable element, said bridge element comprising an air slit and an exhaust.

Machine tools and multi-axis machinery require a high standard precision in line with the development of high precision engineering. High precision in manufacturing can only be accomplished if it is possible to measure and calculate accurately the errors of machine components. Measurement machines as well as manufacturing machines typically have an XY stage for precision movement.

Such types of devices typically comprise a bridge element which moves in one direction (often called the Y-direction) along a working table. A movable element, e.g. a measurement device or manufacturing device, is moved along the bridge element.

Typically the 'individual machine fault' of an individual machine is measured with (often) laser measurement tools and stored. Then all kind of efforts are made to keep conditions the same, so that the 'individual machine fault' stays the same. This requires a very good control over conditions such as temperature and humidity, the use of often (very) expensive materials such as Zerodur and invar to reduce as much as possible any deviation of the established 'individual machine fault'. Even then, the measurement procedure has to be regularly repeated after any service activity that could have affected the configuration. The precision with which the machinery operates is to a large degree dependent on the stability of conditions. In particular temperature variations may influence the precision of measurements and or manufacturing.

Various techniques to ensure that the conditions are controlled as good as possible are known. The most important conditions are those of temperature and humidity. A good and accurate control of these parameters is required to ensure a good precision.

Inside the bridge element the presence of all kinds of moving parts (to move the movable element) and electronic devices, for instance to activate or control parts of the movable element, may influence the temperature. It is known to provide an air slit in the bridge (or X-module) and an exhaust, through which an underpressure can be provided inside the bridge. The presence of the underpressure draws air from outside the bridge element into the bridge element, having a cooling and stabilizing effect on the temperature and possibly also humidity inside the bridge element.

However, although such an air flow does provide for some stabilisation of the temperature inside the bridge element, the air flow through the slit may show variations. Such variations in air flow may lead to variations in temperature and thereby to variations in precision.

It is remarked that from JP57184643 a device is known wherein the thermal deformation of duct structures in a bridge is reduced by dividing the inside of the duct into several cells with partition walls, each cell provided with an intake and outlet hole.

It is an object of the invention to provide a precision apparatus as described in the opening paragraph with an improved control of the flow through the slit.

To this end the apparatus in accordance with the invention is **characterised in that** the bridge element comprises a primary air duct, substantially extending along the length of the bridge element, which primary air duct is provided with apertures, evenly distributed along the length of the bridge element, said evenly apertures forming a passage to a secondary air duct, also substantially extending along the length of the bridge element, through which secondary air duct, in operation, air is drawn through the air slit.

When the air is drawn through the slit in prior art devices, often a pressure drop occurs over the slit, i.e. those parts of the slit close to the point where the air is drawn experience a higher air flow, than points further away from the point where air is drawn. In the invention, the primary air duct has a smoothing effect on the pressure in the secondary air duct, i.e. the pressure in the secondary air duct is made more uniform. Consequently a more uniform flow of air through the slit is provided, enabling a better control of temperature.

In preferred embodiments the primary duct is provided with an exhaust pipe at opposite sides, seen along the length of the bridge element, of the primary air duct. Drawing air at both sides has a further smoothing effect on the air pressure.

In preferred embodiments, the secondary air duct at least partially encases the primary air duct and the primary air duct is provided with two opposing surfaces, each provided with apertures, evenly distributed along the length of the bridge element, to provide an upward and downward air flow in the secondary air duct. Such upward and downward air flows improve the cooling efficiency of the air flow in the secondary air duct.

These and further aspects of the invention will be explained in greater detail by way of example and with reference to the accompanying drawings, in which
Fig. 1 is a schematic drawing of a precision apparatus, in this example an x-y moving machine.
Fig. 2 illustrates in more detail a part of such an apparatus.
Fig. 3 illustrates in cross-section a detail of an apparatus in accordance with the invention
Fig. 4 illustrates in perspective an inner view of a bridge element of or for an apparatus in accordance with the invention.
Fig. 5 illustrates in perspective an outer view of a bridge element of or for an apparatus in accordance with the invention.

The present invention will now be described more fully hereinafter with reference to the accompanying drawings, in which preferred embodiments of the present invention are shown. This invention may, however, be embodied in many different forms and should not be construed as limited to the embodiment set forth herein; rather, these embodiments are provided so that this disclosure will be thorough and complete, and will fully convey the scope of the invention to those skilled in the art. Like numbers refer to like elements throughout.

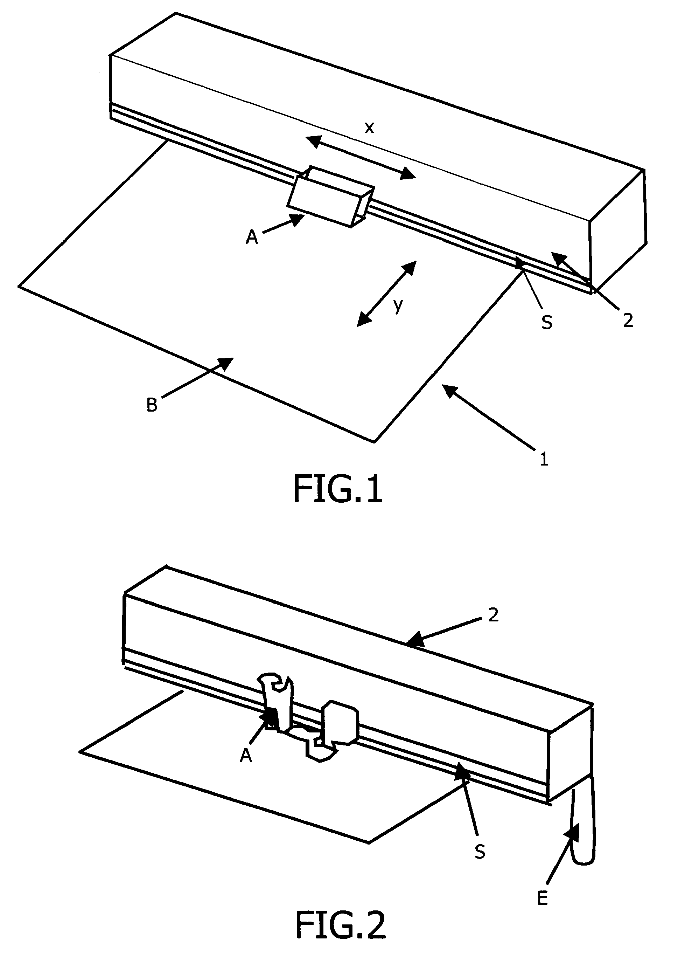

Figure 1 is a schematic drawing of a x-y moving machine 1. The machine has a bridge element 2 for moving a part A over a table B in two perpendicular directions x and y. Such machine may be any kind of precision machinery. Machine tools and multi-axis machinery require a high standard precision in line with the development of high precision engineering. High precision in manufacturing can only be accomplished if it is possible to measure and calculate accurately the errors of machine components. The moving part A moves along the bridge element. The precision with which measurements are taken, or objects manufactured is dependent on the accuracy with which the part A moves in bridge element 2.

Often the 'individual machine fault' of the individual machine with (often) laser measurement tools and store it. Then all kind of efforts are made to keep conditions the same, so that the 'individual machine fault' stays the same. This requires a very good control over conditions such as temperature and humidity, the use of often (very) expensive materials such as Zerodur and invar to reduce as much as possible any deviation of the established 'individual machine fault'.

Various techniques to ensure that the conditions are controlled as good as possible are known. The most important conditions are those of temperature and humidity. A good and accurate control of these parameters is required to ensure a good precision.

Inside the bridge element the presence of all kinds of moving parts (to move the movable element) and electronic devices, for instance to activate or control parts of the movable element may influence the temperature. It is known to provide an air slit in the bridge (or X-module) and a vacuum duct, through which an underpressure can be provided inside the bridge. The presence of the underpressure draws air form outside the bridge into the bridge, having a cooling and stabilizing effect on the temperature and possibly also humidity inside the bridge element. Bridge element 2 is provided with an air slit. Inside the bridge element 2 underpressure is created which generates an inward air flow through the slit S.

Figure 2 shows in somewhat more detail a bridge element with an exhaust E for pumping air by which an underpressure in bridge element 2 is created.

However, when the air is drawn through the slit S, often a pressure drop occurs over the slit S, i.e. those parts of the slit S close to the exhaust point E where the air is drawn experience a higher air flow, than points further away from the point where air is drawn. The stabilising effect of the air flow is thereby not uniform, which may lead to nonuniformity in temperature.

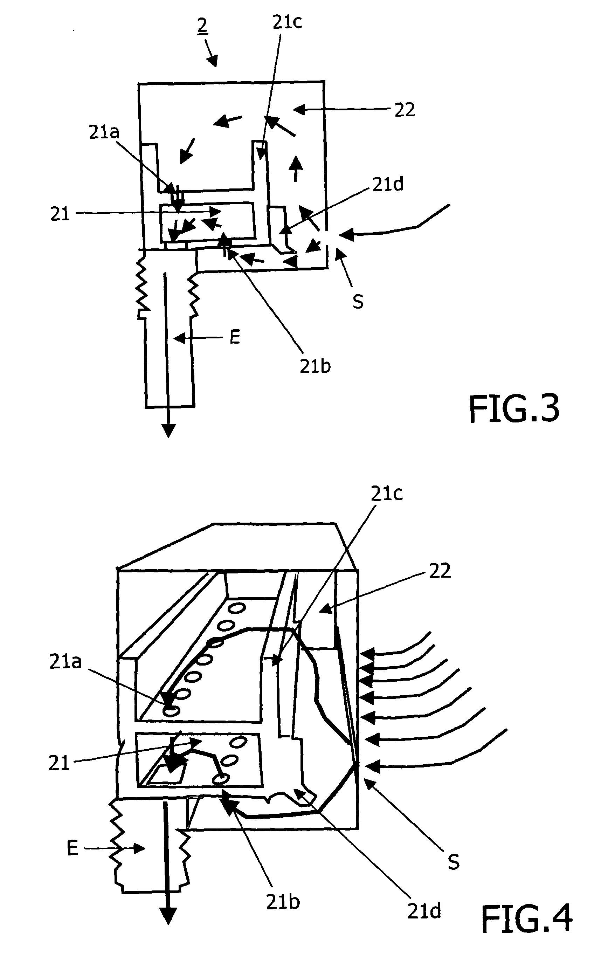

Figure 3 shows in cross section a bridge element for an apparatus in accordance with the invention. The bridge element comprises a primary, inner duct 21 to which the exhaust E is connected. The bridge element also comprises a secondary duct 22 through which secondary duct air is drawn through the slit S. The primary duct comprises, substantially evenly distributed along the length of the bridge element, apertures 21a and 21b. In simple embodiments only one of these rows of apertures may be provided. These apertures form the airflow connection between the primary and the secondary ducts 21, 22. Due to the presence of the evenly distributed apertures, the pressure in the secondary duct is made more uniform.

Preferably the primary duct 21 comprises, as is shown in figure 3, apertures in two opposing surfaces of the primary duct. Preferably the secondary duct at least partially encases the primary duct, so that an upward and downward air flow is created. This increases the uniformity of the pressure and the stability of temperature. Preferably the primary air duct comprises an upward extending part 21 c to force the air flow upward, and also, preferably an downward extending part 21d to force the air flow downward.

Figure 4 shows a perspective inner view of the bridge element shown in fig. 3.

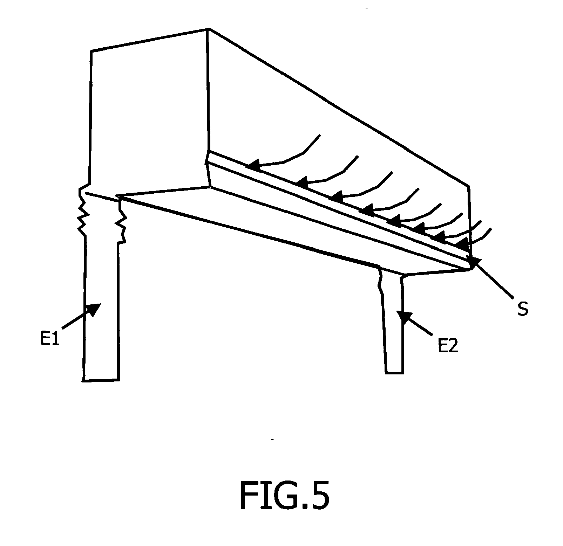

Figure 5 shows a perspective outer view of the same bridge element. A preferred embodiment, namely one wherein an exhaust (E1, E2) is provided at both ends of the bridge element, is shown in fig. 5. This improves uniformity of pressure.

In short the present invention can be described by:

A precision apparatus has a movable member (A), moving in a bridge element (2) arranged perpendicular to the movement of the moveable element. The bridge element comprising an air slit (S) and a exhaust (E). The bridge element (2) comprises a primary air duct (21), substantially extending along the length of the bridge element, which primary air duct is provided with apertures (21a, 21b), The apertures (21a, 21b) are evenly distributed along the length of the bridge element, and form an air flow passage to a secondary air duct (22), also substantially extending along the length of the bridge element. Through the secondary air duct in operation air is drawn through the air slit (S).

The effect is a more evenly distribution of pressure and air flow through the slit.

It will be clear that within the framework of the invention many variations are possible. It will be appreciated by persons skilled in the art that the present invention is not limited by what has been particularly shown and described hereinabove.

## Claims

1. A precision apparatus having a movable member (A), moving in a bridge element (2) arranged for movement perpendicular to the movement of the moveable element, said bridge element comprising an air slit (S) and a exhaust (E), **characterized in that** the bridge element (2) comprises a primary air duct (21), substantially extending along the length of the bridge element, which primary air duct is provided with apertures (21a, 21b), evenly distributed along the length of the bridge element, said evenly distributed apertures forming an air flow passage to a secondary air duct (22), also substantially extending along the length of the bridge element, through which secondary air duct, in operation, air is drawn through the air slit (S).

2. A precision apparatus as claimed in claim 1, wherein the primary duct (21) is provided with an exhaust pipe (E1, E2) at opposite sides, seen along the length of the bridge element, of the primary air duct.

3. A precision apparatus as claimed in claim 1, wherein the secondary air duct (22) at least partially encases the primary air duct (21) and the primary air duct is provided with two opposing surfaces, each provided with apertures (21a, 21b), evenly distributed along the length of the bridge element, to provide an upward and downward air flow in the secondary air duct (22).

4. A precision apparatus as claimed in claim 1, wherein the primary duct (21) comprises an upwardly extending part (21c).

5. A precision apparatus as claimed in claim 1, wherein the primary duct comprises a downwardly extending part (21d).

## Patentansprüche

1. Präzisionsgerät mit einem beweglichen Element (A), welches sich in einem zur Bewegung senkrecht zu der Bewegung des beweglichen Elements angeordneten Brückenelement (2) bewegt, wobei das Brückenelement einen Luftschlitz (S) und einen Ablass (E) umfasst, **dadurch gekennzeichnet, dass** das Brückenelement (2) einen primären Luftkanal (21) umfasst, der sich im Wesentlichen entlang der Länge des Brückenelements erstreckt, wobei der primäre Luftkanal mit Öffnungen (21a, 21b) versehen ist, die entlang der Länge des Brückenelements gleichmäßig verteilt sind, wobei die gleichmäßig verteilten Öffnungen einen Luftstromdurchgang zu einem sekundären Luftkanal (22) bilden, der sich ebenfalls im Wesentlichen entlang der Länge des Brückenelements erstreckt, wobei durch den sekundären Luftkanal bei Betrieb Luft durch den Luftschlitz (S) angesaugt wird.

2. Präzisionsgerät nach Anspruch 1, wobei der Primärkanal (21), entlang der Länge des Brückenelements betrachtet, mit einem Ablassrohr (E1, E2) auf gegenüberliegenden Seiten des primären Luftkanals versehen ist.

3. Präzisionsgerät nach Anspruch 1, wobei der sekundäre Luftkanal (22) den primären Luftkanal (21) zumindest zum Teil umgibt und der primäre Luftkanal mit zwei gegenüberliegenden Oberflächen versehen ist, die jeweils mit entlang der Länge des Brückenelements gleichmäßig verteilten Öffnungen (21a, 21b) versehen sind, um einen nach oben gerichteten und nach unten gerichteten Luftstrom in dem sekundären Luftkanal (22) vorzusehen.

4. Präzisionsgerät nach Anspruch 1, wobei der Primärkanal (21) einen sich nach oben erstreckenden Teil (21c) aufweist.

5. Präzisionsgerät nach Anspruch 1, wobei der Primärkanal einen sich nach unten erstreckenden Teil (21d) aufweist.

## Revendications

1. Appareil de précision ayant un élément mobile (A) qui se déplace dans un élément en pont (2) étant agencé de manière à se déplacer perpendiculairement au mouvement de l'élément mobile, ledit élément en pont comprenant une fente d'air (S) et un tuyau d'échappement (E), **caractérisé en ce que** l'élément en pont (2) comprend un conduit d'air primaire (21) qui s'étend sensiblement le long de la longueur de l'élément en pont, lequel conduit d'air primaire est pourvu d'ouvertures (21a, 21b) qui sont réparties uniformément le long de la longueur de l'élément en pont, lesdites ouvertures uniformément réparties constituant un passage de flux d'air (22) à un conduit d'air secondaire (22) qui s'étend aussi sensiblement le long de la longueur de l'élément en pont, conduit d'air secondaire à travers lequel , en fonctionnement, de l'air est aspiré à travers la fente d'air (S).

2. Appareil de précision selon la revendication 1, dans lequel le conduit d'air primaire (21) est pourvu d'un tuyau d'échappement (E1, E2) des côtés opposés, vu le long de la longueur de l'élément en pont, du conduit d'air primaire.

3. Appareil de précision selon la revendication 1, dans lequel le conduit d'air secondaire (22) entoure au moins partiellement le conduit d'air primaire (21) et dans lequel le conduit d'air primaire est pourvu de deux surfaces opposées, chacune étant pourvue d'ouvertures (21a, 21b) qui sont réparties uniformément le long de la longueur de l'élément en pont afin de fournir un flux d'air vers le haut et vers le bas dans le conduit d'air secondaire (22).

4. Appareil de précision selon la revendication 1, dans lequel le conduit d'air primaire (21) comprend une partie (21c) s'étendant vers le haut.

5. Appareil de précision selon la revendication 1, dans lequel le conduit d'air primaire comprend une partie (21d) s'étendant vers le bas.
